(19) Europäisches Patentamt
European Patent Office
Office européen des brevets

(11) **EP 3 057 258 A1**

(12) **EUROPEAN PATENT APPLICATION**
published in accordance with Art. 153(4) EPC

(43) Date of publication:
**17.08.2016 Bulletin 2016/33**

(51) Int Cl.:
***H04L 1/16*** *(2006.01)*

(21) Application number: **13897084.3**

(86) International application number:
**PCT/CN2013/086760**

(22) Date of filing: **08.11.2013**

(87) International publication number:
**WO 2015/066885 (14.05.2015 Gazette 2015/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **FAN, Shuju**
**Shenzhen**
**Guangdong 518129 (CN)**
• **SHAO, Jiafeng**
**Shenzhen**
**Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **DATA TRANSMISSION METHOD AND DEVICE, AND COMMUNICATION SYSTEM**

(57) Embodiments of the present invention disclose a data transmission method, an apparatus, and a communications system. The present invention relates to the communications field, which can improve transmission performance of a carrier and flexibility in using the carrier. The method includes: when a transmitting apparatus sends data, generating control information corresponding to the data; carrying the control information in a primary carrier and send the control information to a receiving apparatus, carrying, according to the control information, the data in at least one carrier of a second type, and sending the data to the receiving apparatus. The present invention is used for data transmission.

FIG. 1

## Description

## TECHNICAL FIELD

The present invention relates to the communications field, and in particular, to a data transmission method, an apparatus, and a communications system.

## BACKGROUND

A UMTS (Universal Mobile Telecommunications System, Universal Mobile Telecommunications System) is one of standards for global 3G (3rd-generation, third generation) communications formulated by the International Organization for Standardization 3GPP (3rd Generation Partnership Project, 3rd Generation Partnership Project). As one of mainstream technologies used by a third generation mobile communications system, WCDMA (Wideband Code Division Multiple Access, Wideband Code Division Multiple Access) is used in a UMTS version earlier than Release 5. An HSDPA (High Speed Downlink Packet Access, High Speed Downlink Packet Access) technology is introduced into the Release 5 to improve downlink data transmission rate and reduce user data transmission delay, so that a user can have better experience when using a UMTS network.

Channels related to the HSDPA include a downlink HS-PDSCH (High-Speed Physical Downlink Shared Channel, high-speed physical downlink shared channel), and a downlink HS-SCCH (High-Speed Shared Control Channel, high-speed shared control channel) and an uplink HS-DPCCH (Uplink High-Speed Dedicated Physical Control Channel, uplink high-speed dedicated physical control channel).

In an existing multi-carrier HSDPA technology, each carrier is corresponding to an HARQ (Hybrid Automatic Repeat Request, hybrid automatic repeat request) entity (it is assumed that the entity is in a non-MIMO (Multiple-Input Multiple-Output, multiple-input multiple-output) system), and processing operations such as coding, modulation, interleaving, HARQ repeat that are performed on each carrier are independent. In addition, in a practical application, generally, a spectrum bandwidth of an operator may not be a multiple of 5 MHz, and some fragmentary carrier segments such as 2 MHz, 3 MHz, and 4 MHz may exist. When such carriers exist, it is hard for the operator to use the carriers to deploy the UMTS network. Consequently, use of a carrier is very inflexible, and transmission performance of the carrier may easily degrade.

## SUMMARY

Embodiments of the present invention provide a data transmission method, an apparatus, and a communications system, which can improve transmission performance of a carrier and flexibility in using the carrier.

To achieve the foregoing purpose, the following technical solutions are used in the embodiments of the present invention:

According to a first aspect, a data transmission method is provided, including:

when a transmitting apparatus sends data, generating control information corresponding to the data;

carrying, by the transmitting apparatus, the control information in a primary carrier, and sending the control information to a receiving apparatus, where the primary carrier belongs to a carrier of a first type; and

carrying, by the transmitting apparatus according to the control information, the data in at least one carrier of a second type, and sending the data to the receiving apparatus.

With reference to the first aspect, in a first possible implementation manner, the carrying, by the transmitting apparatus according to the control information, the data in at least one carrier of a second type, and sending the data to the receiving apparatus includes:

carrying, by the transmitting apparatus according to the control information, the data in the at least one carrier of the second type and at least one carrier of the first type, and sending the data to the receiving apparatus.

With reference to the first aspect or the first possible implementation manner of the first aspect, in a second possible implementation manner, before the sending, by the transmitting apparatus, the data to the receiving apparatus, the method further includes:

acquiring, by the transmitting apparatus, carrier interleaving indication information, where the carrier interleaving indication information includes a carrier interleaving coefficient index and/or interleaving carrier index indication information; and

interleaving, by the transmitting apparatus according to the carrier interleaving indication information, data carried in the at least two carriers.

With reference to the second possible implementation manner of the first aspect, in a third possible implementation manner, the interleaving, by the transmitting apparatus according to the carrier interleaving indication information, data carried in the at least two carriers includes:

when the carrier interleaving indication information includes the carrier interleaving coefficient index, generating, by the transmitting apparatus, a carrier interleaving coefficient according to the carrier interleaving coefficient index; and

interleaving, by the transmitting apparatus according to the carrier interleaving coefficient, the data carried in the at least two carriers.

With reference to the second possible implementation manner of the first aspect, in a fourth possible implementation manner, the interleaving, by the transmitting apparatus according to the carrier interleaving indication information, data carried in the at least two carriers includes:

> when the carrier interleaving indication information includes the interleaving carrier index indication information, interleaving, by the transmitting apparatus according to the interleaving carrier index indication information, the data carried in the at least two carriers.

With reference to the first aspect, in a fifth possible implementation manner, before the carrying, by the transmitting apparatus according to the control information, the data in at least one carrier of a second type, and sending the data to the receiving apparatus, the method further includes:

> performing, by the transmitting apparatus, physical channel segmentation on a carrier according to a chip rate of each carrier, and a code channel quantity, a modulation scheme, and a maximum quantity of bits carried by each code channel that are used in each carrier; where
> the maximum quantity of bits carried by each code channel is obtained by using a formula
> $$f = \frac{R \times T}{SF} \times K \times \log_2 m$$
> where R is the chip rate, T is a transmission time interval, SF is a spreading factor, K is the code channel quantity, and m is a modulation order.

With reference to the first aspect, in a sixth possible implementation manner, before the generating control information corresponding to the data, the method further includes:

> receiving, by the transmitting apparatus, channel quality information sent by the receiving apparatus; and
> adjusting, by the transmitting apparatus according to the channel quality information, a capacity of data transmitted in each carrier.

With reference to the first aspect, in a seventh possible implementation manner, after the carrying, by the transmitting apparatus according to the control information, the data in at least one carrier of a second type and sending the data to the receiving apparatus, the method further includes:

> receiving, by the transmitting apparatus, a hybrid automatic repeat request acknowledgement message sent by the receiving apparatus.

According to a second aspect, a data transmission method is provided, including:

> receiving, by a receiving apparatus and from a primary carrier, control information sent by a transmitting apparatus, where the primary carrier belongs to a carrier of a first type; and
> receiving, by the receiving apparatus according to the control information, data from at least one carrier of a second type.

With reference to the second aspect, in a first possible implementation manner, the receiving, by the receiving apparatus according to the control information, data from at least one carrier of a second type includes:

> receiving, by the receiving apparatus and according to the control information, the data from the at least one carrier of the second type and at least one carrier of the first type.

With reference to the second aspect or the first possible implementation manner of the second aspect, in a second possible implementation manner, before the receiving, by a receiving apparatus and from a primary carrier, control information sent by a transmitting apparatus, the method further includes:

> acquiring, by the receiving apparatus, carrier interleaving indication information, where the carrier interleaving indication information includes a carrier interleaving coefficient index and/or interleaving carrier index indication information; where
> the receiving, by the receiving apparatus according to the control information, data from at least one carrier of a second type includes:
>
> > receiving, by the receiving apparatus according to the control information, data from at least two carriers; and
> > de-interleaving, by the receiving apparatus according to the carrier interleaving indication information, data carried in the at least two carriers.

With reference to the second aspect, in a third possible implementation manner, before the receiving, by a receiving apparatus and from a primary carrier, control information sent by a transmitting apparatus, the method further includes:

> generating, by the receiving apparatus, channel quality information by measuring channel quality of the carrier of the first type and the carrier of the second type, and sending the channel quality information to the transmitting apparatus.

With reference to the second aspect, in a fourth possible implementation manner, after the receiving, by the receiving apparatus according to the control information, data from at least one carrier of a second type, the method further includes:

demodulating and decoding, by the receiving apparatus, the data, generating a hybrid automatic repeat request acknowledgement message according to a result of the demodulation and decoding, and sending the hybrid automatic repeat request acknowledgement message to the transmitting apparatus.

According to a third aspect, a transmitting apparatus is provided, including:

a control unit, configured to: when the transmitting apparatus sends data, generate control information corresponding to the data, and send the control information to a sending unit; and
the sending unit, configured to receive the control information sent by the control unit, carry the control information in a primary carrier and send the control information to a receiving apparatus, carry, according to the control information, the data in at least one carrier of a second type, and send the data to the receiving apparatus, where the primary carrier belongs to a carrier of a first type.

With reference to the third aspect, in a first possible implementation manner,
the sending unit is further configured to receive the control information sent by the control unit, carry, according to the control information, the data in the at least one carrier of the second type and at least one carrier of the first type, and send the data to the receiving apparatus.
With reference to the third aspect or the first possible implementation manner of the third aspect, in a second possible implementation manner, the transmitting apparatus further includes a receiving unit, and the sending unit includes an interleaving subunit, where
the receiving unit is configured to acquire carrier interleaving indication information and send the carrier interleaving indication information to the interleaving subunit, where the carrier interleaving indication information includes a carrier interleaving coefficient index and/or interleaving carrier index indication information; and
the interleaving subunit is configured to receive the carrier interleaving indication information sent by the receiving unit, and interleave, according to the carrier interleaving indication information, data carried in the at least two carriers.
With reference to the second possible implementation manner of the third aspect, in a third possible implementation manner,
the interleaving subunit is further configured to: when the carrier interleaving indication information includes the carrier interleaving coefficient index, generate a carrier interleaving coefficient according to the carrier interleaving coefficient index, and interleave, according to the carrier interleaving coefficient, the data carried in the at least two carriers.
With reference to the second possible implementation manner of the third aspect, in a fourth possible implementation manner,
the interleaving subunit is further configured to: when the carrier interleaving indication information includes the interleaving carrier index indication information, interleave, according to the interleaving carrier index indication information, the data carried in the at least two carriers.
With reference to the third aspect, in a fifth possible implementation manner,
the control unit is further configured to perform physical channel segmentation on a carrier according to a chip rate of each carrier, and a code channel quantity, a modulation scheme, and a maximum quantity of bits carried by each code channel that are used in each carrier; where the maximum quantity of bits carried by each code channel is obtained by using a formula

$$f = \frac{R \times T}{SF} \times K \times \log_2 m$$ where R is the chip rate, T is a transmission time interval, SF is a spreading factor, K is the code channel quantity, and m is a modulation order.
With reference to the third aspect, in a sixth possible implementation manner, the transmitting apparatus further includes a receiving unit; where
the receiving unit is configured to receive channel quality information sent by the receiving apparatus, and send the channel quality information to the control unit; and
the control unit is further configured to receive the channel quality information sent by the receiving unit, and adjust, according to the channel quality information, a capacity of data transmitted in each carrier.
With reference to the third aspect, in a seventh possible implementation manner, the transmitting apparatus further includes a receiving unit; where
the receiving unit is configured to receive a hybrid automatic repeat request acknowledgement message sent by the receiving apparatus.
According to a fourth aspect, a receiving apparatus is provided, including:

a receiving unit, configured to receive, from a primary carrier, control information sent by a transmitting apparatus, and receive, according to the control information, data from at least one carrier of a second type, where the primary carrier belongs to a carrier of a first type.

With reference to the fourth aspect, in a first possible implementation manner,
the receiving unit is further configured to receive, according to the control information, the data from the at least one carrier of the second type and at least one carrier of the first type.

With reference to the fourth aspect or the first possible implementation manner of the fourth aspect, in a second possible implementation manner, the receiving apparatus further includes a sending unit, and the receiving unit includes an interleaving subunit, where
the receiving unit is configured to acquire carrier interleaving indication information, where the carrier interleaving indication information includes a carrier interleaving coefficient index and/or interleaving carrier index indication information;
the receiving unit is further configured to receive data from at least two carriers according to the control information; and
the interleaving subunit is configured to de-interleave, according to the carrier interleaving indication information, data carried in the at least two carriers.

With reference to the fourth aspect, in a third possible implementation manner, the receiving apparatus further includes a measurement unit and a sending unit; where
the measurement unit is configured to generate channel quality information by measuring channel quality of the carrier of the first type and the carrier of the second type, and send the channel quality information to the sending unit; and
the sending unit is configured to receive the channel quality information sent by the measurement unit, and send the channel quality information to the transmitting apparatus.

With reference to the fourth aspect, in a fourth possible implementation manner, the receiving apparatus further includes a demodulation unit and a sending unit; where the receiving unit is further configured to send the data to the demodulation unit;
the demodulation unit is configured to receive the data sent by the receiving unit, demodulate and decode the data, generate a hybrid automatic repeat request acknowledgement message according to a result of the demodulation and decoding, and send the hybrid automatic repeat request acknowledgement message to the sending unit; and
the sending unit is configured to receive the hybrid automatic repeat request acknowledgement message sent by the demodulation unit, and send the hybrid automatic repeat request acknowledgement message to the transmitting apparatus.

According to a fifth aspect, a transmitting apparatus is provided, including: a processor and a memory that are connected by using a data bus, and a transmitter that is separately connected to the processor and the memory; where
the processor is configured to: when the transmitting apparatus sends data, generate control information corresponding to the data; and
the processor is further configured to carry, by using the transmitter, the control information in a primary carrier and send the control information to the receiving apparatus, carry, according to the control information, the data in at least one carrier of a second type, and send the data to the receiving apparatus, where the primary carrier belongs to a carrier of a first type.

With reference to the fifth aspect, in a first possible implementation manner,
the processor is further configured to carry, by using the transmitter and according to the control information, the data in the at least one carrier of the second type and at least one carrier of the first type, and send the data to the receiving apparatus.

With reference to the fifth aspect or the first possible implementation manner of the fifth aspect, in a second possible implementation manner, the transmitting apparatus further includes a receiver connected to the data bus, where:

the processor is further configured to acquire carrier interleaving indication information by using the receiver, where the carrier interleaving indication information includes a carrier interleaving coefficient index and/or interleaving carrier index indication information, and interleave, according to the carrier interleaving indication information, data carried in the at least two carriers.

With reference to the second possible implementation manner of the fifth aspect, in a third possible implementation manner,
the processor is further configured to: when the carrier interleaving indication information includes the carrier interleaving coefficient index, generate a carrier interleaving coefficient according to the carrier interleaving coefficient index, and interleave, according to the carrier interleaving coefficient, the data carried in the at least two carriers.

With reference to the second possible implementation manner of the fifth aspect, in a fourth possible implementation manner,
the processor is further configured to: when the carrier interleaving indication information includes the interleaving carrier index indication information, interleave, according to the interleaving carrier index indication information, the data carried in the at least two carriers.

With reference to the fifth aspect, in a fifth possible implementation manner,
the processor is further configured to perform physical channel segmentation on a carrier according to a chip rate of each carrier, and a code channel quantity, a modulation scheme, and a maximum quantity of bits carried by each code channel that are used in each carrier; where the maximum quantity of bits carried by each code channel is obtained by using a formula

$$f = \frac{R \times T}{SF} \times K \times \log_2 m$$

where R is the chip rate, T is a transmission time interval, SF is a spreading factor, K is the code channel quantity, and m is a modulation order.

With reference to the fifth aspect, in a sixth possible implementation manner, the transmitting apparatus further includes a receiver connected to the data bus; where

the processor is further configured to receive, by using the receiver, channel quality information sent by the receiving apparatus, and adjust, according to the channel quality information, a capacity of data transmitted in each carrier.

With reference to the fifth aspect, in a seventh possible implementation manner, the transmitting apparatus further includes a receiver connected to the data bus; where

the processor is further configured to receive, by using the receiver, a hybrid automatic repeat request acknowledgement message sent by the receiving apparatus.

According to a sixth aspect, a receiving apparatus is provided, including: a processor and a memory that are connected by using a data bus, and a receiver that is separately connected to the processor and the memory; where

the processor is configured to receive, by using the receiver and from a primary carrier, control information sent by the transmitting apparatus, and receive, according to the control information, data from at least one carrier of a second type, where the primary carrier belongs to a carrier of a first type.

With reference to the sixth aspect, in a first possible implementation manner,

the processor is further configured to receive, by using the receiver and according to the control information, the data from the at least one carrier of the second type and at least one carrier of the first type.

With reference to the sixth aspect or the first possible implementation manner of the sixth aspect, in a second possible implementation manner, the receiving apparatus further includes a transmitter connected to the data bus, where:

the processor is further configured to acquire carrier interleaving indication information by using the receiver, where the carrier interleaving indication information includes a carrier interleaving coefficient index and/or interleaving carrier index indication information, and

the processor is further configured to receive, by using the receiver and according to the control information, data from at least two carriers, and de-interleave, according to the carrier interleaving indication information, the data carried in the at least two carriers.

With reference to the sixth aspect, in a third possible implementation manner, the receiving apparatus further includes a transmitter connected to the data bus;

where

the processor is further configured to generate channel quality information by measuring channel quality of the carrier of the first type and the carrier of the second type, and send the channel quality information to the transmitting apparatus by using the transmitter.

With reference to the sixth aspect, in a fourth possible implementation manner, the receiving apparatus further includes a transmitter connected to the data bus; where

the processor is further configured to demodulate and decode the data, generate a hybrid automatic repeat request acknowledgement message according to a result of the decoding, and send the hybrid automatic repeat request acknowledgement message to the transmitting apparatus by using the transmitter.

According to a seventh aspect, a communications system is provided, including a transmitting apparatus and a receiving apparatus, where

the transmitting apparatus is the transmitting apparatus according to the third aspect or any one of possible implementation manners of the third aspect, and the receiving apparatus is the receiving apparatus according to the fourth aspect or any one of possible implementation manners of the fourth aspect;

or,

the transmitting apparatus is the transmitting apparatus according to the fifth aspect or any one of possible implementation manners of the fifth aspect, and the receiving apparatus is the receiving apparatus according to the sixth aspect or any one of possible implementation manners of the sixth aspect.

According to the data transmission method, the apparatus, and the communications system that are provided in embodiments of the present invention, when sending data, a transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention.

FIG. 1 is a schematic flowchart of a data transmission method according to an embodiment of the present invention;

FIG. 2 is a schematic flowchart of another data transmission method according to an embodiment of the present invention;

FIG. 3 is a schematic flowchart of still another data transmission method according to an embodiment of the present invention;

FIG. 4 is a schematic diagram of carrier classification according to an embodiment of the present invention;

FIG. 5 is a schematic structural diagram of a transmitting apparatus according to an embodiment of the present invention;

FIG. 6 is a schematic structural diagram of a receiving apparatus according to an embodiment of the present invention;

FIG. 7 is a schematic structural diagram of a transmitting apparatus according to another embodiment of the present invention;

FIG. 8 is a schematic structural diagram of a receiving apparatus according to another embodiment of the present invention; and

FIG. 9 is a schematic diagram of a communications system architecture according to an embodiment of the present invention.

## DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention.

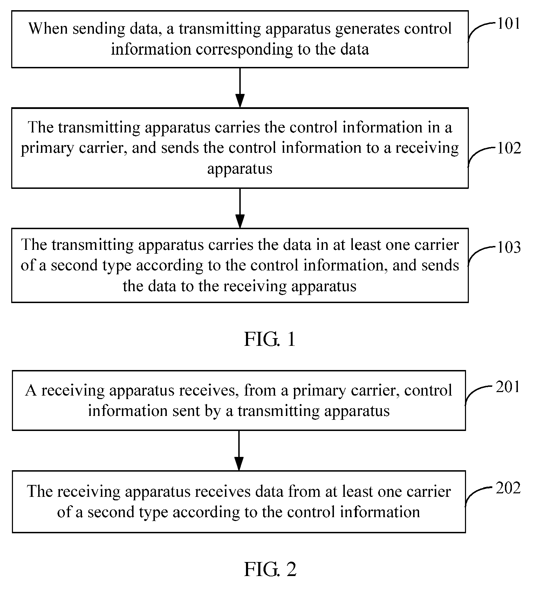

In a multi-carrier system, an embodiment of the present invention provides a data transmission method that may be used by a transmitting apparatus. Referring to FIG. 1, the method includes:

101. When sending data, the transmitting apparatus generates control information corresponding to the data.

The control information includes a carrier set, a channelization code set, a modulation scheme, an HARQ process number, a transmission block length, a redundancy version, and a constellation diagram, and the like. Optionally, code channel information, and the like, of each carrier may be carried in each carrier and transmitted with data.

Optionally, the transmitting apparatus may be a base station or user equipment.

102. The transmitting apparatus carries the control information in a primary carrier, and sends the control information to a receiving apparatus.

The primary carrier belongs to a carrier of a first type. Currently, as an auxiliary to the carrier of the first type, a carrier of a second type is mainly used for data transmission. Because only a data channel and a pilot channel exist in the carrier of the second type, one carrier of the first type needs to be selected as the primary carrier for sending the control information. Specifically and optionally, a network side determines and notifies the transmitting apparatus which carrier is used as the primary carrier.

103. The transmitting apparatus carries the data in at least one carrier of a second type according to the control information, and sends the data to the receiving apparatus.

The carrier of the second type used to carry data transmission belongs to a secondary carrier, which indicates that data channels of all carriers of the second type are used as an overall resource pool, and data transmission is performed by using one control channel.

According to the data transmission method provided in this embodiment of the present invention, when sending data, a transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

An embodiment of the present invention provides another data transmission method that may be used by a receiving apparatus. Referring to FIG. 2, the method includes:

201. The receiving apparatus receives, from a primary carrier, control information sent by a transmitting apparatus.

The primary carrier belongs to a carrier of a first type. Optionally, the receiving apparatus may be a base station or user equipment.

202. The receiving apparatus receives data from at least one carrier of a second type according to the control information.

The carrier of the second type used to carry data belongs to a secondary carrier.

According to the data transmission method provided in this embodiment of the present invention, a receiving apparatus receives, from a primary carrier, control information sent by the transmitting apparatus, and receives, from at least one carrier of a second type, the data according to the control information, which improves transmission performance of a carrier and flexibility in using the carrier.

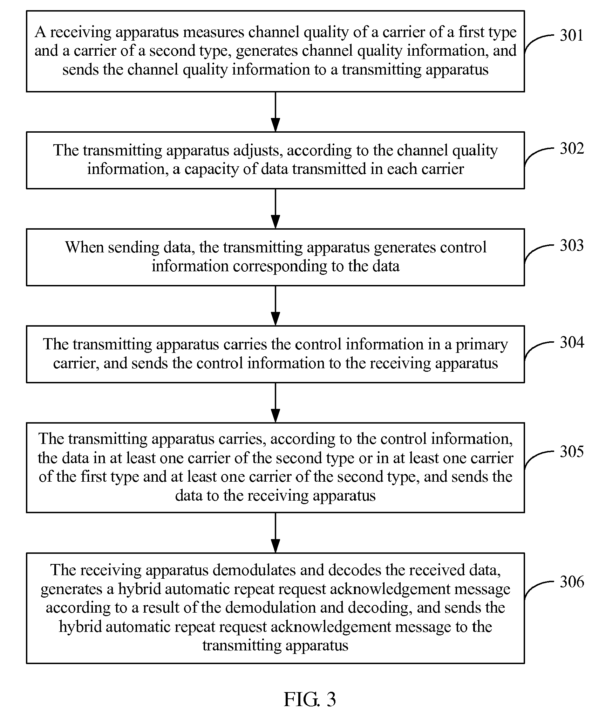

Optionally, referring to FIG. 3, an embodiment of the present invention provides another data transmission method, including:

301. A receiving apparatus measures channel quality of a carrier of a first type and a carrier of a second type, generates channel quality information, and sends the channel quality information to a transmitting apparatus.

Optionally, the receiving apparatus may be a base station or user equipment, and the transmitting apparatus may be a base station or user equipment.

302. The transmitting apparatus adjusts, according to the channel quality information, a capacity of data transmitted in each carrier.

Optionally, a network side determines and notifies the transmitting apparatus which carrier is used as a primary carrier and which carrier is used as a secondary carrier. The transmitting apparatus adjusts, according to the channel quality information, the capacity of the data transmitted in each carrier. However, the channel quality information is not the only basis for the transmitting apparatus to adjust the capacity of the data transmitted in each carrier.

Specifically and optionally, the transmitting apparatus performs physical channel segmentation on a carrier according to a chip rate of each carrier, and a code channel quantity, a modulation scheme, and a maximum quantity of bits carried by each code channel that are used in each carrier, so as to facilitate sending of the data.

The maximum quantity of bits carried by each code channel is obtained by using a formula

$$f = \frac{R \times T}{SF} \times K \times \log_2 m,$$

where R is the chip rate, T is a transmission time interval, SF is a spreading factor, K is the code channel quantity, and m is a modulation order.

303. When sending data, the transmitting apparatus generates control information corresponding to the data.

The control information includes a carrier set, a channelization code set, a modulation scheme, an HARQ process number, a transmission block length, a redundancy version, a constellation diagram, and the like. Optionally, code channel information, and the like, of each carrier may be carried in each carrier and transmitted with data.

304. The transmitting apparatus carries the control information in a primary carrier, and sends the control information to the receiving apparatus.

305. The transmitting apparatus carries, according to the control information, the data in at least one carrier of the second type or in at least one carrier of the first type and at least one carrier of the second type, and sends the data to the receiving apparatus.

Here, other carriers except the primary carrier are collectively referred to as secondary carriers, and data may be carried in all carriers for transmission.

If only data channels of all carriers of the second type are used as an overall resource pool, the data is carried in and sent from the carrier of the second type. If data channels of all carriers of the first type and the second type are scheduled as a uniform resource pool, the data may be carried in and sent from the carriers of the first type and the second type; in this case, the primary carrier belongs to a carrier of the first type, and may also send the data.

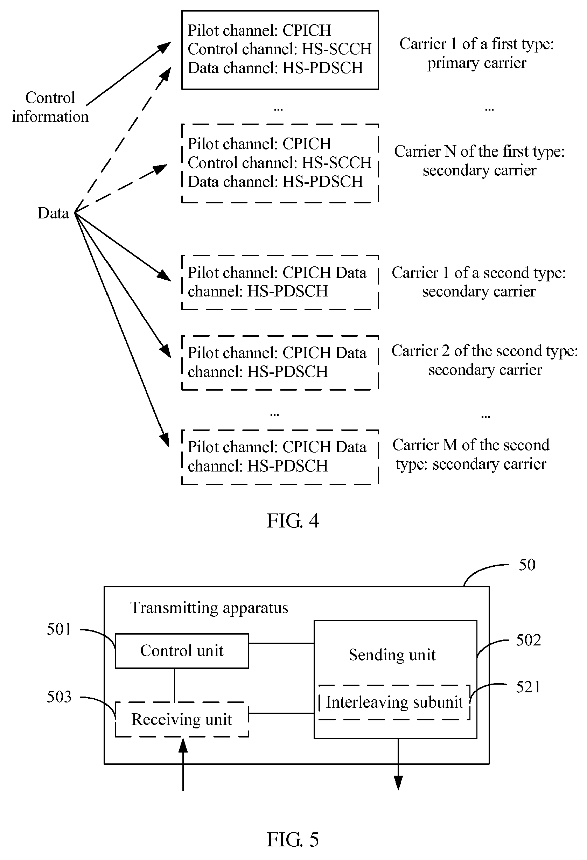

Referring to FIG. 4, a carrier of a first type has both a control channel and a data channel, and a carrier of a second type has only a data channel. A primary carrier belongs to a carrier of the first type, and all carriers of the first type except the primary carrier and all carriers of the second type are secondary carriers. The primary carrier may also carry data. A secondary carrier is used to carry data. Optionally, each secondary carrier may also carry code channel information, and the like, of each secondary carrier. Therefore, when the data needs to be carried, one or more carriers of the second type may be selected to carry the data, and one or more carriers of the second type and one or more carriers of the first type may also be selected to carry the data.

306. The receiving apparatus demodulates and decodes the received data, generates a hybrid automatic repeat request acknowledgement message according to a result of the demodulation and decoding, and sends the hybrid automatic repeat request acknowledgement message to the transmitting apparatus.

The hybrid automatic repeat request acknowledgement message is used to notify the transmitting apparatus whether the data is successfully sent. If the data is not successfully sent, the data needs to be resent.

Optionally, if multiple carriers are configured for the transmitting apparatus, data in different carriers may be interleaved before the data is sent. A specific interleaving method includes:

    acquiring, by the transmitting apparatus, carrier interleaving indication information.

The carrier interleaving indication information includes a carrier interleaving coefficient index and/or interleaving carrier index indication information. Optionally, a network side sends the carrier interleaving indication information to the transmitting apparatus.

The transmitting apparatus interleaves, according to the carrier interleaving indication information, data carried in the at least two carriers.

When the carrier interleaving indication information includes the carrier interleaving coefficient index, the transmitting apparatus generates a carrier interleaving coefficient according to the carrier interleaving coefficient index, and interleaves, according to the carrier interleaving coefficient, the data carried in the at least two carriers.

When the carrier interleaving indication information includes the interleaving carrier index indication information, the transmitting apparatus interleaves, according to the interleaving carrier index indication information, the data carried in the at least two carriers.

For example:

A. The interleaving carrier index indication information is a parity indication. Interleaving may be performed on several carriers whose carrier index numbers are odd numbers, or be performed on several carriers whose carrier index numbers are even numbers. Specific interleaving is performed according to a specific indication of the carrier index indication information.

B. The interleaving carrier index indication information is a neighboring indication. Interleaving may be performed between two carriers whose carrier index numbers are respectively 1 and 2 or 3 and 4, and may also be performed on four carriers whose carrier index numbers are respectively 1, 2, 3, and 4 or 5, 6, 7, and 8. Specific interleaving is performed according to a specific indication of the carrier index indication information.

C. The interleaving carrier index indication information is a carrier indication that directly indicates carriers to be interleaved.

Specifically, carrier interleaving may include:

A. Data block interleaving, which is performed before a codeword or a flow is formed and after spectrum spreading and scrambling are performed.

B. Interleaving between codewords, which is performed between codewords of different carriers.

C. Interleaving between flows, which is performed between flows of different carriers.

Correspondingly, after receiving the data sent by the transmitting apparatus, the receiving apparatus acquires carrier interleaving indication information from the network side, and de-interleaves, according to the carrier interleaving indication information, the data carried in the at least two carriers.

According to the data transmission method provided in this embodiment of the present invention, when sending data, a transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

An embodiment of the present invention provides a transmitting apparatus 50. Referring to FIG. 5, the transmitting apparatus 50 includes a sending unit 502 and a control unit 501, where the sending unit 502 and the control unit 501 are connected.

The control unit 501 is configured to: when the transmitting apparatus 50 sends data, generate control information corresponding to the data, and send the control information to the sending unit 502.

The sending unit 502 is configured to receive the control information sent by the control unit 501, carry the control information in a primary carrier and send the control information to a receiving apparatus, carry the data in at least one carrier of a second type according to the control information, and send the data to the receiving apparatus, where the primary carrier belongs to a carrier of a first type.

According to the transmitting apparatus provided in this embodiment of the present invention, when sending data, the transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

Optionally, the transmitting apparatus 50 further includes a receiving unit 503, and the sending unit 502 includes an interleaving subunit 521. The receiving unit 503, the control unit 501, and the sending unit 502 are connected.

The sending unit 502 is further configured to receive the control information sent by the control unit 501, carry, according to the control information, the data in the at least one carrier of the second type and at least one carrier of the first type, and send the data to the receiving apparatus.

If only data channels of all carriers of the second type are used as an overall resource pool, the data is carried in and sent from the carrier of the second type. If data channels of all carriers of the first type and the second type are scheduled as a uniform resource pool, the data may be carried in and sent from the carriers of the first type and the second type; in this case, the primary carrier belongs to a carrier of the first type, and may also send the data.

The receiving unit 503 is configured to acquire carrier interleaving indication information, and send the carrier interleaving indication information to the interleaving subunit 521, where the carrier interleaving indication information includes a carrier interleaving coefficient index and/or interleaving carrier index indication information.

The interleaving subunit 521 is configured to receive the carrier interleaving indication information sent by the receiving unit 503, and interleave, according to the carrier interleaving indication information, data carried in the at least two carriers.

The interleaving subunit 521 is further configured to: when the carrier interleaving indication information includes the carrier interleaving coefficient index, generate a carrier interleaving coefficient according to the carrier interleaving coefficient index, and interleave, according to the carrier interleaving coefficient, the data carried in the at least two carriers.

The interleaving subunit 521 is further configured to: when the carrier interleaving indication information includes the interleaving carrier index indication information, interleave, according to the interleaving carrier index indication information, the data carried in the at least two carriers.

The control unit 501 is further configured to perform physical channel segmentation on a carrier according to a chip rate of each carrier, and a code channel quantity, a modulation scheme, and a maximum quantity of bits carried by each code channel that are used in each carrier; where

the maximum quantity of bits carried by each code channel is obtained by using a formula

$$f = \frac{R \times T}{SF} \times K \times \log_2 m$$

where R is the chip rate, T is a transmission time interval, SF is a spreading factor, K is the code channel quantity, and m is a modulation order.

The receiving unit 503 is further configured to receive channel quality information sent by the receiving apparatus, and send the channel quality information to the control unit 501.

The control unit 501 is further configured to receive the channel quality information sent by the receiving unit 503, and adjust, according to the channel quality information, a capacity of data transmitted in each carrier.

In addition, the channel quality information is one but is not the only basis for the transmitting apparatus 50 to adjust the capacity of the data transmitted in each carrier.

The receiving unit 503 is further configured to receive a hybrid automatic repeat request acknowledgement message sent by the receiving apparatus.

The hybrid automatic repeat request is used to notify the transmitting apparatus 50 whether the data is successfully sent. If the data is not successfully sent, the data needs to be resent.

According to the transmitting apparatus provided in this embodiment of the present invention, when sending data, the transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

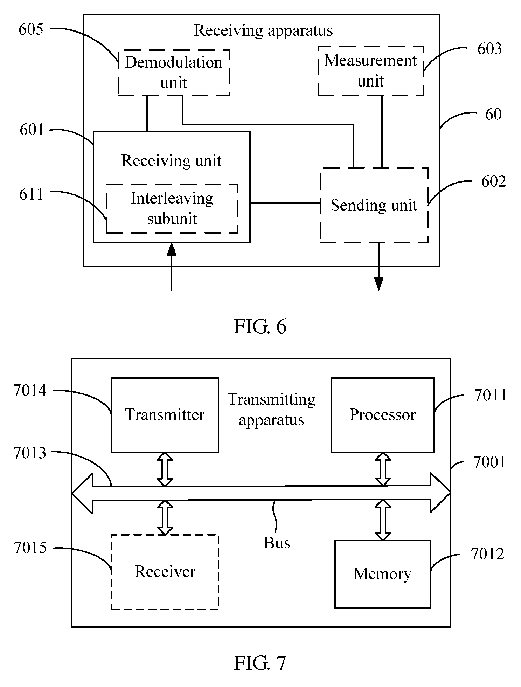

An embodiment of the present invention provides a receiving apparatus 60. Referring to FIG. 6, the receiving apparatus 60 includes a receiving unit 601.

The receiving unit 601 is configured to receive, from a primary carrier, control information sent by a transmitting apparatus, and receive, according to the control information, data from at least one carrier of a second type. The primary carrier belongs to a carrier of a first type.

According to the receiving apparatus provided in this embodiment of the present invention, the receiving apparatus receives, from a primary carrier, control information sent by the transmitting apparatus, and receives, from at least one carrier of a second type, the data according to the control information, which improves transmission performance of a carrier and flexibility in using the carrier.

Optionally, the receiving apparatus 60 may further include a sending unit 602, a measurement unit 603, and a demodulation unit 604, and the receiving unit 601 includes an interleaving subunit 611. The sending unit 602, the receiving unit 601, the measurement unit 603, and the demodulation unit 604 are connected, and the receiving unit 601 and the demodulation unit 604 are connected.

Optionally, the receiving unit 601 is further configured to receive, according to the control information, the data from the at least one carrier of the second type and at least one carrier of the first type.

A carrier from which the data is received is corresponding to a carrier that is used to carry the data when the transmitting apparatus transmits the data. If the transmitting apparatus carries the data in and sends the data from a carrier of the second type, the data is received from the carrier of the second type; and if the transmitting apparatus carries the data in and send the data from a carrier of the second type and a carrier of the first type, the data is received from the carrier of the second type and the carrier of the first type.

The receiving unit 601 is further configured to acquire carrier interleaving indication information. The carrier interleaving indication information includes a carrier interleaving coefficient index and/or interleaving carrier index indication information.

The receiving unit 601 is further configured to receive data from at least two carriers according to the control information.

The interleaving subunit 611 is configured to de-interleave, according to the carrier interleaving indication information, data carried in the at least two carriers.

The measurement unit 603 is configured to generate channel quality information by measuring channel quality of the carrier of the first type and the carrier of the second type, and send the channel quality information to the sending unit 602.

The sending unit 602 is configured to receive the channel quality information sent by the measurement unit 603, and send the channel quality information to the transmitting apparatus.

The receiving unit 601 is further configured to send the data to the demodulation unit 604.

The demodulation unit 604 is configured to receive the data sent by the receiving unit 601, demodulate and decode the data, generate a hybrid automatic repeat request acknowledgement message according to a result of the demodulation and decoding, and send the hybrid automatic repeat request acknowledgement message to the sending unit 602.

The sending unit 602 is configured to receive the hybrid automatic repeat request acknowledgement message sent by the demodulation unit 604, and send the hybrid automatic repeat request acknowledgement message to the transmitting apparatus.

According to the receiving apparatus provided in this embodiment of the present invention, the receiving apparatus receives, from a primary carrier, control information sent by the transmitting apparatus, and receives, from at least one carrier of a second type, the data according to the control information, which improves transmission performance of a carrier and flexibility in using the carrier.

An embodiment of the present invention provides a transmitting apparatus 7001. Referring to FIG. 7, the device may be embedded in or the device itself may be a computer with a microprocessor, such as a general-purpose computer, a customized computer, and a portable device such as a mobile phone terminal or a tablet. The transmitting apparatus 7001 includes: at least one processor 7011, a memory 7012, a bus 7013, and a transmitter 7014, where the at least one processor 7011, the memory 7012, and the transmitter 7014 are connected by using the bus 7013 and implement mutual communication.

The bus 7013 may be an Industry Standard Architecture (Industry Standard Architecture, ISA for short) bus, a Peripheral Component Interconnect (Peripheral Component, PCI for short) bus, an Extended Industry Standard Architecture (Extended Industry Standard Architecture, EISA for short) bus, or the like. The bus 7013 may be categorized into an address bus, a bus, a control bus, and the like. For ease of denotation, the bus is indicated by using only one thick line in FIG. 7; however, it does not indicate that there is only one bus or only one type of bus.

The memory 7012 is configured to store executable program code, where the program code includes computer operation instructions. The memory 7012 may include a high-speed RAM memory 7012, and may further include a non-volatile memory (non-volatile memory) 7012, for example, at least one disk memory 7012.

The processor 7011 may be a central processing unit 7011 (Central Processing Unit, CPU for short), an application specific integrated circuit (Application Specific Integrated Circuit, ASIC for short), or one or more integrated circuits configured to implement this embodiment of the present invention.

The transmitter 7014 is mainly configured to implement sending of data and information in this embodiment.

The processor 7011 is configured to: when the transmitting apparatus 7001 sends data, generate control information corresponding to the data.

The processor 7011 is further configured to carry, by using the transmitter 7014, the control information in a primary carrier and send the control information to the receiving apparatus, carry, according to the control information, the data in at least one carrier of a second type, and send the data to the receiving apparatus, where the primary carrier belongs to a carrier of a first type.

According to the transmitting apparatus provided in this embodiment of the present invention, when sending data, the transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

Optionally, the processor 7011 is further configured to carry, by using the transmitter 7014 and according to the control information, the data in the at least one carrier of the second type and at least one carrier of the first type, and send the data to the receiving apparatus.

Further, the transmitting apparatus 7001 further includes a receiver 7015 connected to the bus 7013.

The processor 7011 is further configured to acquire carrier interleaving indication information by using the receiver 7015, where the carrier interleaving indication information includes a carrier interleaving coefficient index and/or interleaving carrier index indication information, and interleave, according to the carrier interleaving indication information, data carried in the at least two carriers.

Further, the processor 7011 is further configured to: when the carrier interleaving indication information includes the carrier interleaving coefficient index, generate a carrier interleaving coefficient according to the carrier interleaving coefficient index, and interleave, according to the carrier interleaving coefficient, the data carried in the at least two carriers.

The processor 7011 is further configured to: when the carrier interleaving indication information includes the interleaving carrier index indication information, interleave, according to the interleaving carrier index indication information, the data carried in the at least two carriers.

Optionally, the processor 7011 is further configured to perform physical channel segmentation on a carrier according to a chip rate of each carrier, and a code channel quantity, a modulation scheme, and a maximum quantity of bits carried by each code channel that are used in each carrier; where

the maximum quantity of bits carried by each code channel is obtained by using a formula

$$f = \frac{R \times T}{SF} \times K \times \log_2 m \,,$$ where R is the chip rate, T is a transmission time interval, SF is a spreading factor, K is the code channel quantity, and m is a modulation order.

Optionally, the processor 7011 is further configured to receive, by using the receiver 7015, channel quality information sent by the receiving apparatus, and adjust, according to the channel quality information, a capacity of data transmitted in each carrier.

Optionally, the processor 7011 is further configured to receive, by using the receiver 7015, a hybrid automatic repeat request acknowledgement message sent by the receiving apparatus.

According to the transmitting apparatus provided in this embodiment of the present invention, when sending data, the transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

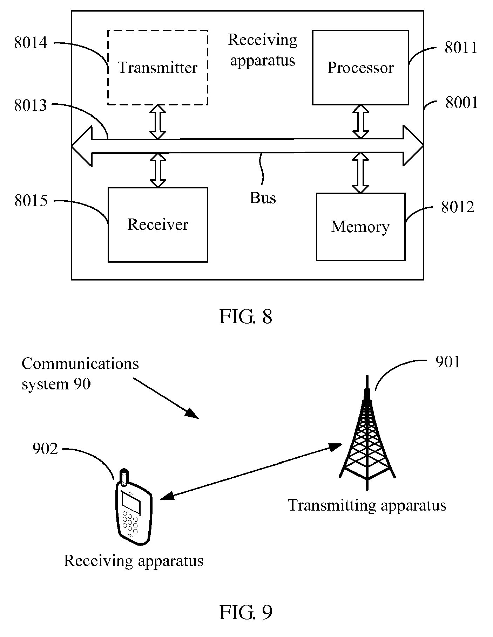

An embodiment of the present invention provides a receiving apparatus 8001. Referring to FIG. 8, the device may be embedded in or the device itself may be a computer with a microprocessor, such as a general-purpose computer, a customized computer, and a portable device such as a mobile phone terminal or a tablet. The transmitting apparatus includes: at least one processor 8011, a memory 8012, a bus 8013, and a receiver 8015, where the at least one processor 8011, the memory 8012, and the receiver 8015 are connected by using the bus 8013 and implement mutual communication.

The bus 8013 may be an Industry Standard Architecture (Industry Standard Architecture, ISA for short) bus, a Peripheral Component Interconnect (Peripheral Component, PCI for short) bus, an Extended Industry Standard Architecture (Extended Industry Standard Architecture, EISA for short) bus, or the like. The bus 8013 may be categorized into an address bus, a data bus, a control bus, and the like. For ease of denotation, the bus is indicated by using only one thick line in FIG. 8; however, it does not indicate that there is only one bus or only one type of bus.

The memory 8012 is configured to store executable program code, where the program code includes computer operation instructions. The memory 8012 may include a high-speed RAM memory 8012, and may further include a non-volatile memory (non-volatile memory) 8012, for example, at least one disk memory 8012.

The processor 8011 may be a central processing unit 8011 (Central Processing Unit, CPU for short), an application specific integrated circuit (Application Specific Integrated Circuit, ASIC for short), or one or more integrated circuits configured to implement this embodiment of the present invention.

The receiver 8015 is further configured to implement receiving of data and information in this embodiment.

The processor 8011 is configured to receive, by using the receiver 8015 and from a primary carrier, control information sent by a transmitting apparatus, and receive, according to the control information, data from at least one carrier of a second type, where the primary carrier belongs to a carrier of a first type.

According to the receiving apparatus provided in this embodiment of the present invention, the receiving apparatus receives, from a primary carrier, control information sent by the transmitting apparatus, and receives, from at least one carrier of a second type, the data according to the control information, which improves transmission performance of a carrier and flexibility in using the carrier.

Optionally, the processor 8011 is further configured to receive, by using the receiver 8015 and according to the control information, data from the at least one carrier of the second type and at least one carrier of the first type.

Optionally, the receiving apparatus 8001 further includes a transmitter 8014 connected to the bus 8013.

The processor 8011 is further configured to acquire carrier interleaving indication information by using the receiver 8015, where the carrier interleaving indication information includes a carrier interleaving coefficient index and/or interleaving carrier index indication information.

The processor 8011 is further configured to receive, by using the receiver 8015 and according to the control information, data from at least two carriers, and de-interleave, according to the carrier interleaving indication information, the data carried in the at least two carriers.

Optionally, the processor 8011 is further configured to generate channel quality information by measuring channel quality of the carrier of the first type and the carrier of the second type, and send the channel quality information to the transmitting apparatus by using the transmitter 8014.

Optionally, the processor 8011 is further configured to demodulate and decode the data, generate a hybrid automatic repeat request acknowledgement message according to a result of the demodulation and decoding, and send the hybrid automatic repeat request acknowledgement message to the transmitting apparatus by using the transmitter 8014.

According to the receiving apparatus provided in this embodiment of the present invention, the receiving apparatus receives, from a primary carrier, control information sent by the transmitting apparatus, and receives, from at least one carrier of a second type, the data according to the control information, which improves transmission performance of a carrier and flexibility in using the carrier.

An embodiment of the present invention provides a communications system 90. Referring to FIG. 9, the communications system 90 includes a transmitting apparatus 901 and a receiving apparatus 902.

The transmitting apparatus 901 is the transmitting apparatus according to the embodiment corresponding to FIG. 5.

The receiving apparatus 902 is the receiving apparatus according to the embodiment corresponding to FIG. 6.

Alternatively, the transmitting apparatus 901 is the transmitting apparatus according to the embodiment corresponding to FIG. 7.

The receiving apparatus 902 is the receiving apparatus according to the embodiment corresponding to FIG. 8.

For a specific operating principle, reference may be made to the foregoing method and device embodiments, which is not described herein again.

According to the communications system provided in this embodiment of the present invention, when sending data, a transmitting apparatus generates control information corresponding to the data, carries the control information in a primary carrier and sends the control information to a receiving apparatus, and carries, according to the control information, the data in at least one carrier of a second type and sends the data to the receiving apparatus, which improves transmission performance of a carrier and flexibility in using the carrier.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a RAM (Random Access Memory, random access memory), a ROM (Read-Only Memory, read-only memory), an EEPROM (Electrically Erasable Programmable Read-Only Memory, electrically erasable programmable read-only memory), a CD-ROM (Compact Disc Read-Only Memory, compact disc read-only memory) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line, digital subscriber line) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and a disc used by the present invention includes a CD (Compact Disc, compact disc), a laser disc, an optical disc, a DVD disc (Digital Versatile Disc, digital versatile disc), a floppy disk and a Blu-ray disc, where the disk generally copies data by a magnetic means, and the disc copies data optically by a laser means. The foregoing combination should also be included in the protection scope of the computer-readable medium.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:

   when a transmitting apparatus sends data, generating control information corresponding to the data;
   carrying, by the transmitting apparatus, the control information in a primary carrier, and sending the control information to a receiving apparatus, wherein the primary carrier belongs to a carrier of a first type; and
   carrying, by the transmitting apparatus according to the control information, the data in at least one carrier of a second type, and sending the data to the receiving apparatus.

2. The method according to claim 1, wherein the carrying, by the transmitting apparatus according to the control information, the data in at least one carrier of a second type, and sending the data to the receiving apparatus comprises:

   carrying, by the transmitting apparatus according to the control information, the data in the at least one carrier of the second type and at least one carrier of the first type, and sending the data to the receiving apparatus.

3. The method according to claim 1 or 2, wherein before the sending, by the transmitting apparatus, the data to the receiving apparatus, the method further comprises:

   acquiring, by the transmitting apparatus, carrier interleaving indication information, wherein the carrier interleaving indication information comprises a carrier interleaving coefficient index and/or interleaving carrier index indication information; and

interleaving, by the transmitting apparatus according to the carrier interleaving indication information, data carried in at least two carriers.

4. The method according to claim 3, wherein the interleaving, by the transmitting apparatus according to the carrier interleaving indication information, data carried in at least two carriers comprises:

when the carrier interleaving indication information comprises the carrier interleaving coefficient index, generating, by the transmitting apparatus, a carrier interleaving coefficient according to the carrier interleaving coefficient index; and

interleaving, by the transmitting apparatus according to the carrier interleaving coefficient, the data carried in the at least two carriers.

5. The method according to claim 3, wherein the interleaving, by the transmitting apparatus according to the carrier interleaving indication information, data carried in at least two carriers comprises:

when the carrier interleaving indication information comprises the interleaving carrier index indication information, interleaving, by the transmitting apparatus according to the interleaving carrier index indication information, the data carried in the at least two carriers.

6. The method according to claim 1, wherein before the carrying, by the transmitting apparatus according to the control information, the data in at least one carrier of a second type, and sending the data to the receiving apparatus, the method further comprises:

performing, by the transmitting apparatus, physical channel segmentation on a carrier according to a chip rate of each carrier, and a code channel quantity, a modulation scheme, and a maximum quantity of bits carried by each code channel that are used in each carrier; wherein the maximum quantity of bits carried by each code channel is obtained by using a formula

$$f = \frac{R \times T}{SF} \times K \times \log_2 m$$

wherein R is the chip rate, T is a transmission time interval, SF is a spreading factor, K is the code channel quantity, and m is a modulation order.

7. The method according to claim 1, wherein before the generating control information corresponding to the data, the method further comprises:

receiving, by the transmitting apparatus, channel quality information sent by the receiving apparatus; and

adjusting, by the transmitting apparatus according to the channel quality information, a capacity of data transmitted in each carrier.

8. The method according to claim 1, wherein after the carrying, by the transmitting apparatus according to the control information, the data in at least one carrier of a second type, and sending the data to the receiving apparatus, the method further comprises:

receiving, by the transmitting apparatus, a hybrid automatic repeat request acknowledgement message sent by the receiving apparatus.

9. A data transmission method, comprising:

receiving, by a receiving apparatus and from a primary carrier, control information sent by a transmitting apparatus, wherein the primary carrier belongs to a carrier of a first type; and receiving, by the receiving apparatus according to the control information, data from at least one carrier of a second type.

10. The method according to claim 9, wherein the receiving, by the receiving apparatus according to the control information, data from at least one carrier of a second type comprises:

receiving, by the receiving apparatus and according to the control information, the data from the at least one carrier of the second type and at least one carrier of the first type.

11. The method according to claim 9 or 10, wherein, before the receiving, by a receiving apparatus and from a primary carrier, control information sent by a transmitting apparatus, the method further comprises:

acquiring, by the receiving apparatus, carrier interleaving indication information, wherein the carrier interleaving indication information comprises a carrier interleaving coefficient index and/or interleaving carrier index indication information; wherein the receiving, by the receiving apparatus according to the control information, data from at least one carrier of a second type comprises:

receiving, by the receiving apparatus according to the control information, data from at least two carriers; and

de-interleaving, by the receiving apparatus according to the carrier interleaving indication information, data carried in the at least two carriers.

12. The method according to claim 9, wherein, before the receiving, by a receiving apparatus and from a primary carrier, control information sent by a transmitting apparatus, the method further comprises:

generating, by the receiving apparatus, channel quality information by measuring channel quality of the carrier of the first type and the carrier of the second type, and sending the channel quality information to the transmitting apparatus.

13. The method according to claim 9, wherein after the receiving, by the receiving apparatus according to the control information, data from at least one carrier of a second type, the method further comprises:

demodulating and decoding, by the receiving apparatus, the data, generating a hybrid automatic repeat request acknowledgement message according to a result of the demodulation and decoding, and sending the hybrid automatic repeat request acknowledgement message to the transmitting apparatus.

14. A transmitting apparatus, comprising:

a control unit, configured to: when the transmitting apparatus sends data, generate control information corresponding to the data, and send the control information to a sending unit; and the sending unit, configured to receive the control information sent by the control unit, carry the control information in a primary carrier and send the control information to a receiving apparatus, carry, according to the control information, the data in at least one carrier of a second type, and send the data to the receiving apparatus, wherein the primary carrier belongs to a carrier of a first type.

15. The transmitting apparatus according to claim 14, wherein
the sending unit is further configured to receive the control information sent by the control unit, carry, according to the control information, the data in the at least one carrier of the second type and at least one carrier of the first type, and send the data to the receiving apparatus.

16. The transmitting apparatus according to claim 14 or 15, wherein the transmitting apparatus further comprises a receiving unit, and the sending unit comprises an interleaving subunit; wherein

the receiving unit is configured to acquire carrier interleaving indication information and send the carrier interleaving indication information to the interleaving subunit, wherein the carrier interleaving indication information comprises a carrier interleaving coefficient index and/or interleaving carrier index indication information; and
the interleaving subunit is configured to receive the carrier interleaving indication information sent by the receiving unit, and interleave, according to the carrier interleaving indication information, data carried in the at least two carriers.

17. The transmitting apparatus according to claim 16, wherein
the interleaving subunit is further configured to: when the carrier interleaving indication information comprises the carrier interleaving coefficient index, generate a carrier interleaving coefficient according to the carrier interleaving coefficient index, and interleave, according to the carrier interleaving coefficient, the data carried in the at least two carriers.

18. The transmitting apparatus according to claim 16, wherein
the interleaving subunit is further configured to: when the carrier interleaving indication information comprises the interleaving carrier index indication information, interleave, according to the interleaving carrier index indication information, the data carried in the at least two carriers.

19. The transmitting apparatus according to claim 14, wherein
the control unit is further configured to perform physical channel segmentation on a carrier according to a chip rate of each carrier, and a code channel quantity, a modulation scheme, and a maximum quantity of bits carried by each code channel that are used in each carrier; wherein
the maximum quantity of bits carried by each code channel is obtained by using a formula

$$f = \frac{R \times T}{SF} \times K \times \log_2 m$$

wherein R is the chip rate, T is a transmission time interval, SF is a spreading factor, K is the code channel quantity, and m is a modulation order.

20. The transmitting apparatus according to claim 14, wherein the transmitting apparatus further comprises a receiving unit; wherein
the receiving unit is configured to receive channel quality information sent by the receiving apparatus, and send the channel quality information to the control unit; and
the control unit is further configured to receive the channel quality information sent by the receiving unit, and adjust, according to the channel quality information, a capacity of data transmitted in each carrier.

21. The transmitting apparatus according to claim 14, wherein the transmitting apparatus further comprises a receiving unit; wherein
the receiving unit is configured to receive a hybrid automatic repeat request acknowledgement message sent by the receiving apparatus.

22. A receiving apparatus, comprising:

a receiving unit, configured to receive, from a primary carrier, control information sent by a transmitting apparatus, and receive, according to the control information, data from at least one carrier of a second type, wherein the primary carrier belongs to a carrier of a first type.

23. The receiving apparatus according to claim 22, wherein
the receiving unit is further configured to receive, according to the control information, the data from the at least one carrier of the second type and at least one carrier of the first type.

24. The receiving apparatus according to claim 22 or 23, wherein the receiving unit comprises an interleaving subunit; wherein
the receiving unit is configured to acquire carrier interleaving indication information, wherein the carrier interleaving indication information comprises a carrier interleaving coefficient index and/or interleaving carrier index indication information;
the receiving unit is further configured to receive data from at least two carriers according to the control information; and
the interleaving subunit is configured to de-interleave, according to the carrier interleaving indication information, data carried in the at least two carriers.

25. The receiving apparatus according to claim 22, wherein the receiving apparatus further comprises a measurement unit and a sending unit; wherein
the measurement unit is configured to generate channel quality information by measuring channel quality of the carrier of the first type and the carrier of the second type, and send the channel quality information to the sending unit; and
the sending unit is configured to receive the channel quality information sent by the measurement unit, and send the channel quality information to the transmitting apparatus.

26. The receiving apparatus according to claim 22, wherein the receiving apparatus further comprises a demodulation unit and a sending unit; wherein

the receiving unit is further configured to send the data to the demodulation unit;
the demodulation unit is configured to receive the data sent by the receiving unit, demodulate and decode the data, generate a hybrid automatic repeat request acknowledgement message according to a result of the demodulation and decoding, and send the hybrid automatic repeat request acknowledgement message to the sending unit; and
the sending unit is configured to receive the hybrid automatic repeat request acknowledgement message sent by the demodulation unit, and send the hybrid automatic repeat request acknowledgement message to the transmitting apparatus.

27. A transmitting apparatus, comprising: a processor and a memory that are connected by using a data bus, and a transmitter that is separately connected to the processor and the memory; wherein
the processor is configured to: when the transmitting apparatus sends data, generate control information corresponding to the data; and
the processor is further configured to carry, by using the transmitter, the control information in a primary carrier and send the control information to the receiving apparatus, carry, according to the control information, the data in at least one carrier of a second type, and send the data to the receiving apparatus, wherein the primary carrier belongs to a carrier of a first type.

28. The transmitting apparatus according to claim 27, wherein
the processor is further configured to carry, by using the transmitter and according to the control information, the data in the at least one carrier of the second type and at least one carrier of the first type, and send the data to the receiving apparatus.

29. The transmitting apparatus according to claim 27 or 28, wherein the transmitting apparatus further comprises a receiver connected to the data bus; and
the processor is further configured to acquire carrier interleaving indication information by using the receiver, wherein the carrier interleaving indication information comprises a carrier interleaving coefficient index and/or interleaving carrier index indication information, and interleave, according to the carrier interleaving indication information, data carried in at least two carriers.

30. The transmitting apparatus according to claim 29, wherein
the processor is further configured to: when the carrier interleaving indication information comprises the carrier interleaving coefficient index, generate a carrier interleaving coefficient according to the carrier interleaving coefficient index, and interleave, according to the carrier interleaving coefficient, the data carried in the at least two carriers.

31. The transmitting apparatus according to claim 29, wherein
the processor is further configured to: when the carrier interleaving indication information comprises the interleaving carrier index indication information, interleave, according to the interleaving carrier index indication information, the data carried in the at least two carriers.

32. The transmitting apparatus according to claim 27, wherein
the processor is further configured to perform physical channel segmentation on a carrier according to a chip rate of each carrier, and a code channel quantity, a modulation scheme, and a maximum quantity of bits carried by each code channel that are used in each carrier; wherein
the maximum quantity of bits carried by each code channel is obtained by using a formula

$$f = \frac{R \times T}{SF} \times K \times \log_2 m$$

wherein R is the chip rate, T is a transmission time interval, SF is a spreading factor, K is the code channel quantity, and m is a modulation order.

33. The transmitting apparatus according to claim 27, wherein the transmitting apparatus further comprises a receiver connected to the data bus; and
the processor is further configured to receive, by using the receiver, channel quality information sent from the receiving apparatus, and adjust, according to the channel quality information, a capacity of data transmitted in each carrier.

34. The transmitting apparatus according to claim 27, wherein the transmitting apparatus further comprises a receiver connected to the data bus; and
the processor is further configured to receive, by using the receiver, a hybrid automatic repeat request acknowledgement message sent by the receiving apparatus.

35. A receiving apparatus, comprising: a processor and a memory that are connected by using a data bus, and a receiver that is separately connected to the processor and the memory; wherein
the processor is configured to receive, by using the receiver and from a primary carrier, control information sent from a transmitting apparatus, and receive, according to the control information, data from at least one carrier of a second type, wherein the primary carrier belongs to a carrier of a first type.

36. The receiving apparatus according to claim 35, wherein
the processor is further configured to receive, by using the receiver and according to the control information, the data from the at least one carrier of the second type and at least one carrier of the first type.

37. The receiving apparatus according to claim 35 or 36, wherein the receiving apparatus further comprises a transmitter connected to the data bus;
the processor is further configured to acquire carrier interleaving indication information by using the receiver, wherein the carrier interleaving indication information comprises a carrier interleaving coefficient index and/or interleaving carrier index indication information; and
the processor is further configured to receive, by using the receiver and according to the control information, data from at least two carriers, and de-interleave, according to the carrier interleaving indication information, the data carried in the at least two carriers.

38. The receiving apparatus according to claim 35, wherein the receiving apparatus further comprises a transmitter connected to the data bus; and
the processor is further configured to generate channel quality information by measuring channel quality of the carrier of the first type and the carrier of the second type, and send the channel quality information to the transmitting apparatus by using the transmitter.

39. The receiving apparatus according to claim 35, wherein the receiving apparatus further comprises a transmitter connected to the data bus; and
the processor is further configured to demodulate and decode the data, generate a hybrid automatic repeat request acknowledgement message according to a result of the decoding, and send the hybrid automatic repeat request acknowledgement message to the transmitting apparatus by using the transmitter.

40. A communications system, comprising a transmitting apparatus and a receiving apparatus, wherein the transmitting apparatus is the transmitting apparatus according to any one of claims 14 to 21, and the receiving apparatus is the receiving apparatus according to any one of claims 22 to 26;
or,
the transmitting apparatus is the transmitting apparatus according to any one of claims 27 to 34, and the receiving apparatus is the receiving apparatus according to any one of claims 35 to 39.

When sending data, a transmitting apparatus generates control information corresponding to the data — 101

↓

The transmitting apparatus carries the control information in a primary carrier, and sends the control information to a receiving apparatus — 102

↓

The transmitting apparatus carries the data in at least one carrier of a second type according to the control information, and sends the data to the receiving apparatus — 103

FIG. 1

A receiving apparatus receives, from a primary carrier, control information sent by a transmitting apparatus — 201

↓

The receiving apparatus receives data from at least one carrier of a second type according to the control information — 202

FIG. 2

A receiving apparatus measures channel quality of a carrier of a first type and a carrier of a second type, generates channel quality information, and sends the channel quality information to a transmitting apparatus — 301

The transmitting apparatus adjusts, according to the channel quality information, a capacity of data transmitted in each carrier — 302

When sending data, the transmitting apparatus generates control information corresponding to the data — 303

The transmitting apparatus carries the control information in a primary carrier, and sends the control information to the receiving apparatus — 304

The transmitting apparatus carries, according to the control information, the data in at least one carrier of the second type or in at least one carrier of the first type and at least one carrier of the second type, and sends the data to the receiving apparatus — 305

The receiving apparatus demodulates and decodes the received data, generates a hybrid automatic repeat request acknowledgement message according to a result of the demodulation and decoding, and sends the hybrid automatic repeat request acknowledgement message to the transmitting apparatus — 306

FIG. 3

Control
information

Data

| Pilot channel: CPICH<br>Control channel: HS-SCCH<br>Data channel: HS-PDSCH | Carrier 1 of a first type:<br>primary carrier |

...    ...

| Pilot channel: CPICH<br>Control channel: HS-SCCH<br>Data channel: HS-PDSCH | Carrier N of the first type:<br>secondary carrier |

| Pilot channel: CPICH Data<br>channel: HS-PDSCH | Carrier 1 of a second type:<br>secondary carrier |

| Pilot channel: CPICH Data<br>channel: HS-PDSCH | Carrier 2 of the second type:<br>secondary carrier |

...    ...

| Pilot channel: CPICH Data<br>channel: HS-PDSCH | Carrier M of the second<br>type: secondary carrier |

FIG. 4

50

Transmitting apparatus

501 — Control unit

502 — Sending unit

521 — Interleaving subunit

503 — Receiving unit

FIG. 5

605 —
Receiving apparatus
Demodulation unit
Measurement unit — 603
— 60
601 —
Receiving unit
— 602
611 —
Interleaving subunit
Sending unit

FIG. 6

7014 —
Transmitter
Transmitting apparatus
Processor — 7011
7013 —
— 7001
Bus
7015 —
Receiver
Memory — 7012

FIG. 7

8014 — Transmitter | Receiving apparatus | Processor — 8011

8013 —

Bus

8015 — Receiver | Memory — 8012

8001

**FIG. 8**

Communications system 90

901

902 —

Transmitting apparatus

Receiving apparatus

**FIG. 9**

<table>
<tr><td rowspan="2" align="center"><b>INTERNATIONAL SEARCH REPORT</b></td><td>International application No.</td></tr>
<tr><td>PCT/CN2013/086760</td></tr>
</table>

**A. CLASSIFICATION OF SUBJECT MATTER**

H04L 1/16 (2006.01) i

According to International Patent Classification (IPC) or to both national classification and IPC

**B. FIELDS SEARCHED**

Minimum documentation searched (classification system followed by classification symbols)

IPC: H04L; H04Q

Documentation searched other than minimum documentation to the extent that such documents are included in the fields searched

Electronic data base consulted during the international search (name of data base and, where practicable, search terms used)

CNTXT, CNABS, CNKI, DWPI: transmit+, transfer+, data, main, the first pattern, carrier, relat+, correspond+, control+

**C. DOCUMENTS CONSIDERED TO BE RELEVANT**

| Category* | Citation of document, with indication, where appropriate, of the relevant passages | Relevant to claim No. |
|---|---|---|
| X | CN 101651524 A (HUAWEI TECH CO., LTD.) 17 February 2010 (17.02.2010) description, page 2 line 4 to page 3 line 1, page 3 line 17 to page 4 line 11 | 1-40 |
| A | CN 102377543 A (SAMSUNG ELECTRONICS CO., LTD.) 14 March 2012 (14.03.2012) the whole document | 1-40 |
| A | KR 20100039145 A (LG ELECTRONICS INC.) 15 April 2010 (15.04.2010) the whole document | 1-40 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 July 2014 | 20 August 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LU, Qiuyan<br><br>Telephone No. (86-10) 62089459 |

Form PCT/ISA/210 (second sheet) (July 2009)

INTERNATIONAL SEARCH REPORT
Information on patent family members

| | | International application No. |
|---|---|---|
| | | PCT/CN2013/086760 |

| Patent Documents referred in the Report | Publication Date | Patent Family | Publication Date |
|---|---|---|---|
| CN 101651524 A | 17 February 2010 | CN 101651524 B | 24 April 2013 |
| CN 102377543 A | 14 March 2012 | None | |
| KR 20100039145 A | 15 April 2010 | None | |

Form PCT/ISA /210 (patent family annex) (July 2009)